# EUROPÄISCHE PATENTSCHRIFT

(11) **EP 3 177 556 B1**
(45) Veröffentlichungstag und Bekanntmachung des Hinweises auf die Patenterteilung: **03.04.2019**
(21) Anmeldenummer: 15733445.9
(22) Anmeldetag: 01.07.2015
(51) Int. Cl.: B66B 3/00, B66B 1/46

(54) **ENERGIEAUTARKES AUFZUGSANLAGENBEDIENELEMENT UND AUFZUGSANLAGE MIT EINEM SOLCHEN BEDIENELEMENT**
ENERGY-AUTONOMOUS ELEVATOR SYSTEM CONTROL ELEMENT AND LIFT SYSTEM WITH SUCH A CONTROL ELEMENT
ÉLÉMENT DE COMMANDE D'INSTALLATION D'ASCENSEUR AUTONOME EN ÉNERGIE ET INSTALLATION D'ASCENSEUR DOTÉE D'UN TEL ÉLÉMENT DE COMMANDE

(30) Priorität: 04.08.2014 EP 14179745
(43) Veröffentlichungstag der Anmeldung: 14.06.2017
(73) Patentinhaber: Inventio AG, 6052 Hergiswil (CH)
(72) Erfinder: SONNENMOSER, Astrid, CH-6280 Hochdorf (CH); LIEBETRAU, Christoph, CH-5737 Menziken (CH); KUSSEROW, Martin, CH-6005 Luzern (CH); HARTMANN, Thomas, CH-6277 Kleinwangen (CH)
(86) Internationale Anmeldenummer: PCT/EP2015/064989
(87) Internationale Veröffentlichungsnummer: WO 2016/020123

(56) Entgegenhaltungen:
- DE-U1-202006 011 196
- US-A1- 2003 116 385
- US-A1- 2005 073 221
- US-A1- 2009 295 550

## Beschreibung

Die Erfindung betrifft zuvorderst ein im Folgenden als Aufzugsanlagenbedienelement oder kurz als Bedienelement bezeichnetes Bedienelement für eine Aufzugsanlage.

Solche Bedienelemente sind an sich bekannt und werden in der Fachterminologie auch als COP (car/cabin operating panel; Kabinenbedienfeld) und LOP (landing operating panel; Stockwerksbedienfeld) bezeichnet.

Der Betrieb einer Aufzugsanlage ist in seinen Grundzügen an sich bekannt und bedarf daher hier keiner detaillierten Erläuterung: Ein Benutzer der Aufzugsanlage verwendet Bedienfelder der eingangs genannten Art, um einen Stockwerksruf oder einen Kabinenruf auszulösen. Eine Aufzugsanlagensteuerung empfängt aufgrund eines Stockwerks- oder Kabinenrufs generierte Signale und veranlasst eine Bewegung einer von der Aufzugsanlage umfassten Aufzugskabine, um den Stockwerks- oder Kabinenruf zu erfüllen.

Eine bisher erforderliche Verkabelung jedes Bedienelements mit der Aufzugsanlagensteuerung wird entbehrlich, wenn die aufgrund eines Stockwerks- oder Kabinenrufs generierten Signale leitungslos an die Aufzugsanlagensteuerung übermittelt werden. Auch eine solche leitungslose Signalübermittlung erfordert allerdings noch eine Verkabelung jedes Bedienelements für dessen Energieversorgung.

US 2009295550 A1 beschreibt ein Etagenrufschaltermodul, das einen drahtlosen Sender enthält, der durch Betätigung des Knopfs mit Energie von dem Energiegenerator versorgt wird, um ein Etagenrufsignal zu übertragen, und ein Etagenleuchtanzeigemodul, das Aufzugstatusinformationen empfangen, anzeigen und übertragen kann, wobei das Etagenleuchtanzeigemodul sowohl eine Knopfanzeigefunktion als auch eine Etagenanzeigefunktion ausführt.

US 2003116385 A1 offenbart ein Eingabepaneel mit einem elektrophoretischen Anzeigesystem. In einer detaillierten Ausführungsform wird das Eingabepaneel in Form von einem Touchscreen mit elektrophoretischen Anzeige gestaltet.

Eine Aufgabe der vorliegenden Erfindung besteht entsprechend darin, ein Bedienelement zu schaffen, das gänzlich ohne externe Verkabelung auskommt.

Diese Aufgabe wird mittels eines energieautarken Aufzugsanlagenbedienelements mit den Merkmalen des Anspruchs 1 gelöst. Das energieautarke Aufzugsanlagenbedienelement (Bedienelement) umfasst Mittel zur Erfassung einer Bedienhandlung sowie Mittel zur leitungslosen Weiterleitung zumindest eines automatisch anhand der Bedienhandlung durch das Aufzugsanlagenbedienelement generierbaren Signals an eine entfernte Aufzugsanlagensteuerung. Erfindungsgemäß ist darüber hinaus vorgesehen, dass das Aufzugsanlagenbedienelement eine im Folgenden als Energiegewinnungseinheit bezeichnete Vorrichtung zur Energiegewinnung umfasst.

Der Vorteil der erfindungsgemäßen Ausführungsform des Aufzugsanlagenbedienelements besteht darin, dass die von dem Aufzugsanlagenbedienelement umfasste Energiegewinnungseinheit das Aufzugsanlagenbedienelement zu einem energieautarken Aufzugsanlagenbedienelement macht. Eine Verkabelung des im Folgenden kurz als Bedienelement bezeichneten Aufzugsanlagenbedien-elements zur Energieversorgung ist damit nicht mehr erforderlich. Aufgrund der leitungslosen Weiterleitung eines automatisch anhand einer Bedienhandlung generierbaren Signals an die jeweilige Aufzugsanlagensteuerung kommt das Bedienelement tatsächlich ohne externe Verkabelung aus und ist auf diese Weise besonders leicht und unkompliziert zu installieren. Das energieautarke Bedienelement kommt dabei speziell auch für eine Nachrüstung oder Modernisierung einer Aufzugsanlage in Betracht.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin und sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Als Energiegewinnungseinheit oder Teil einer solchen Energiegewinnungseinheit kommen einzeln oder in Kombination ein Photovoltaikmodul (Solarzelle), eine Induktionsspule und/oder ein Piezoelement oder jeweils eine Mehrzahl solcher Einheiten in Betracht. Mittels eines Photovoltaikmoduls oder mehrerer Photovoltaikmodule kann in an sich bekannter Art und Weise das Umgebungslicht, also natürliches Licht und/oder künstliches Licht, zur Erzeugung elektrischer Energie ausgenutzt werden. Eine Induktionsspule kommt bei einer elektromagnetischen Energieübertragung als Empfänger in Betracht, so dass auf diese Weise elektrische Energie in das energieautarke Bedienelement einspeisbar ist und die Induktionsspule oder eine Gruppe von Induktionsspulen als Energiegewinnungseinheit fungiert. Als Sender bei einer solchen elektromagnetischen Energieübertragung kommt zum Beispiel ein vom Benutzer der Aufzugsanlage mitgeführtes Mobiltelefon oder dergleichen in Betracht. Schließlich kommt zusätzlich oder alternativ auch ein Piezoelement oder eine Gruppe von Piezoelementen als Energiegewinnungseinheit in Betracht. Eine auf ein Piezoelement ausgeübte mechanische Kraft führt bekanntlich zu einer elektrischen Spannung über dem Piezoelement, so dass Bedienhandlungen, die der Benutzer der Aufzugsanlage durch Drücken auf einzelne Abschnittes des Bedienelements vornimmt, zur Erzeugung elektrischer Energie verwendbar sind und damit das oder jedes Piezoelement insgesamt als Energiegewinnungseinheit fungiert.

Bei einer speziellen Ausführungsform des energieautarken Bedienelements weist dieses einen Energiespeicher auf, der aus der Energiegewinnungseinheit mit elektrischer Energie gespeist werden kann. Für den Fall, dass mittels der Energiegewinnungseinheit überschüssige elektrische Energie erzeugt wird, kann diese im Energiespeicher zwischengespeichert und dort bei Bedarf wieder abgerufen werden.

Eine Ausführungsform eines energieautarken Bedienelements der bisher beschriebenen Art zeichnet sich durch einen schichtartigen Aufbau aus, wobei das Bedienelement in einer ersten Schicht eine konfigurierbare Anzeigeeinheit und in einer weiteren Schicht die Energiegewinnungseinheit umfasst. Ein solcher schichtartigen Aufbau ist von Vorteil, weil auf diese Weise die Anzeigeeinheit und die Energiegewinnungseinheit - nicht notwendig in dieser Reihenfolge - quasi hintereinander angeordnet werden können, wobei für die Anzeigeeinheit und die Energiegewinnungseinheit jeweils die komplette Fläche oder im Wesentlichen die komplette Fläche des Bedienelements zur Verfügung steht. Eine möglichst große nutzbare Fläche ist sowohl für ein als Energiegewinnungseinheit fungierendes Photovoltaikmodul wie auch für die Anzeigeeinheit vorteilhaft. Zudem lassen sich bei einem solchen schichtartigen Aufbau des Bedienelements leicht mehrere Energiegewinnungseinheiten kombinieren, zum Beispiel ein Photovoltaikmodul in einer Schicht oberhalb einer Anzeigeeinheit und ein Piezoelement in einer weiteren Schicht, zum Beispiel unterhalb der Anzeigeeinheit. Ein solches Piezoelement oder eine Gruppe von Piezoelementen kann optional gleichzeitig als Mittel zur Erfassung einer Bedienhandlung und als (zusätzliche) Energiegewinnungseinheit fungieren.

Bei einer weiteren Ausführungsform eines energieautarken Bedienelements der bisher beschriebenen Art, das zur Versorgung mit elektrischer Energie eine lokale Energiegewinnungseinheit umfasst, liegt das Augenmerk auf einer möglichst weitgehenden Reduktion des Energiebedarfs. Dazu ist vorgesehen, dass das energieautarke Bedienelement eine auf einer Anzeigetechnik ohne erforderliche Erhaltungsenergie basierende Anzeigeeinheit umfasst. Als eine derartige Anzeigeeinheit kommen zum Beispiel eine Einrichtung mit einem interferometrisch arbeitenden Modulator (IMOD; interferometric modulator display) oder eine auf Elektrophorese-Basis fungierende Einrichtung in Betracht. Ein Stichwort in diesem Zusammenhang lautet E-Paper (electronic paper). Bei einer auf Elektrophorese-Basis fungierenden Anzeigeeinheit werden bekanntlich in einem zähflüssigen Polymer enthaltene farbige Partikel durch kurzzeitiges Anlegen einer elektrischen Spannung ausgerichtet, wobei eine auf diese Weise erreichte Darstellung auch nach Wegnahme der elektrischen Spannung, also ohne Erhaltungsspannung, über mehrere Wochen stabil bleibt. Bei einer Anzeigeeinheit mit einem interferometrisch arbeitenden Modulator wird bekanntlich ein Abstand zweier reflektierender Lagen zueinander elektrisch verändert, wobei ein Bildpunkt in Abhängigkeit von einem jeweils erreichten Abstand aufgrund konstruktiver oder destruktiver Interferenz entweder als hell/sichtbar bzw. dunkel/unsichtbar erscheint. Wenn die reflektierenden Lagen ihre gewünschte Position eingenommen haben, ist ihr Zustand stabil, d. h. die Anzeigeeinheit benötigt keine weitere Energie, solange sich das anzuzeigende Bild nicht verändert. Damit ist der Energiebedarf des energieautarken Bedienelements deutlich reduziert. Zudem hat ein Bedienelement mit einer Anzeigeeinheit der zuvor beschriebenen Art den Vorteil, dass E-Paper-Displays sehr robust gegen Beschädigungen sind, denn eine solche Anzeigeeinheit funktioniert zum Beispiel auch noch nach einem Durchstechen.

Das energieautarke Aufzugsanlagenbedienelement kann auch in einer an eine externe Spannungsversorgung anschließbaren Form ausgeführt sein. Dann erfolgt die Versorgung des Aufzugsanlagenbedienelements mit elektrischer Energie im Normalfall mittels der externen Spannungsversorgung, wobei bei einem Ausfall der externen Spannungsversorgung das Aufzugsanlagenbedienelement automatisch und bis zur Wiederkehr der externen Spannungsversorgung auf einen energieautarken Betrieb umschaltet. Alternativ kann auch vorgesehen sein, dass das Aufzugsanlagenbedienelement normalerweise als energieautarkes Aufzugsanlagenbedienelement betrieben wird und eine Verwendung der externen Spannungsversorgung nur dann erfolgt, wenn die Energiegewinnungseinheit keine elektrische Energie liefert oder während einer vorgegebenen oder vorgebbaren Zeitspanne keine elektrische Energie geliefert hat und/oder ein von dem Aufzugsanlagenbedienelement umfasster Energiespeicher sich einem kritischen Ladezustand nähert.

Insgesamt ist die Erfindung auch eine Aufzugsanlage mit zumindest einem derartigen energieautarken Aufzugsanlagenbedienelement.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: eine Aufzugsanlage mit einer Aufzugsanlagensteuerung, einer Aufzugskabine und einzelnen Bedienfeldern,
- Fig. 2: eine Frontseite eines Bedienfelds einer Aufzugsanlage,
- Fig. 3: einen Schnittdarstellung eines hier als Bedienfeld vorgeschlagenen Bedienelements und
- Fig. 4: eine Darstellung eines solchen Bedienelements als Blockdiagramm.

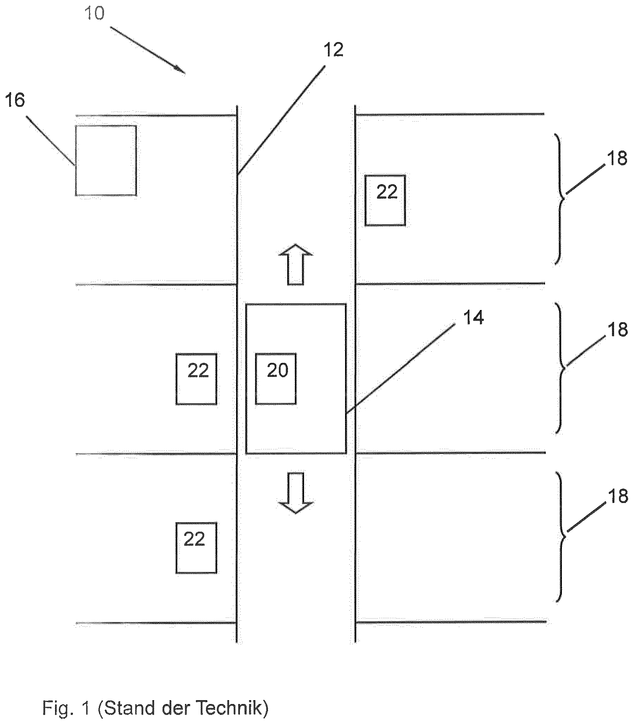

Die Darstellung in Figur 1 zeigt schematisch stark vereinfacht eine Aufzugsanlage 10 in einem selbst nicht gezeigten Gebäude mit zumindest einer in zumindest einem Aufzugsschacht 12 beweglichen Aufzugskabine 14 und einer an einer zentralen Stelle des Gebäudes vorgesehenen Aufzugsanlagensteuerung 16. Die Aufzugsanlagensteuerung 16 ist in an sich bekannter Art und Weise zur Steuerung der Aufzugsanlage 10 vorgesehen. Die oder jede Aufzugskabine 14 ist in an sich bekannter Art und Weise in dem Aufzugsschacht 12 oder in dem jeweiligen Aufzugsschacht 12 beweglich, so dass unterschiedliche Stockwerke 18 des Gebäudes erreichbar sind.

Zu der Aufzugsanlage 10 gehören Bedienfelder 20, 22, nämlich ein Kabinenbedienfeld 20 (COP; car/cabin operating panel) in der Aufzugskabine 14 und Stockwerksbedienfelder 22 (LOP; landing operating panel) auf einzelnen Stockwerken 18.

Gemäß dem hier vorgeschlagenen Ansatz sind zumindest einzelne Bedienfelder 20, 22 als energieautarke Aufzugsanlagenbedienelemente ausgeführt und die nachfolgende Beschreibung wird am Beispiel eines Kabinenbedienfelds 20 als einem solchen energieautarken Aufzugsanlagenbedienelement fortgesetzt. Innerhalb der Aufzugsanlage 10 können alle Stockwerksbedienfelder 22 und das oder jedes Kabinenbedienfeld 20 als energieautarke Aufzugsanlagenbedienelemente realisiert sein, so dass für energieautarke Aufzugsanlagenbedienelemente im Folgenden die zuvor für das Kabinenbedienfeld 20 und die Stockwerksbedienfelder 22 eingeführten Bezugsziffern verwendet werden.

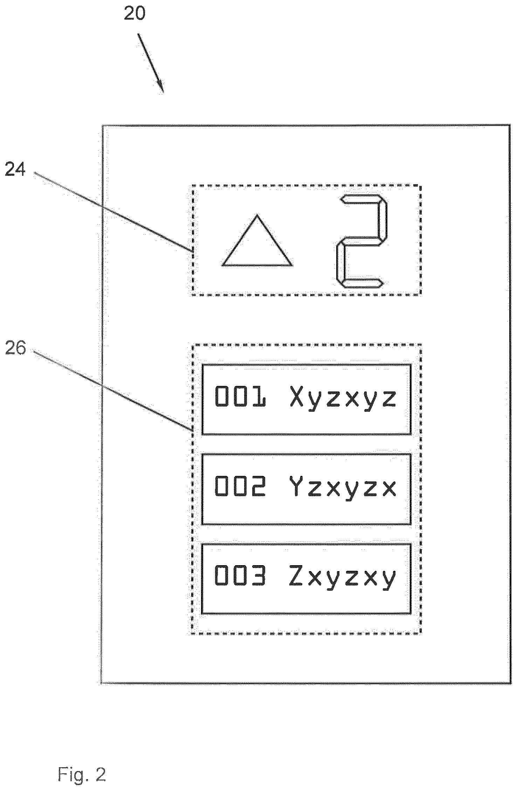

Die Darstellung in Figur 2 zeigt - schematisch stark vereinfacht - eine Draufsicht auf ein als Kabinenbedienfeld 20 fungierendes und im Folgenden mitunter auch nur kurz als Bedienelement 20 bezeichnetes energieautarkes Aufzugsanlagenbedienelement 20. Auf seiner Frontseite umfasst das Bedienelement 20 zum Beispiel zwei Bereiche 24, 26, nämlich einen ersten Bereich 24 zur Darstellung einer jeweiligen Position und Fahrtrichtung der Aufzugskabine 14 oder dergleichen und einen zweiten Bereich 26 zur Vornahme von Bedienhandlungen, nämlich hier der Auslösung eines Kabinenrufs.

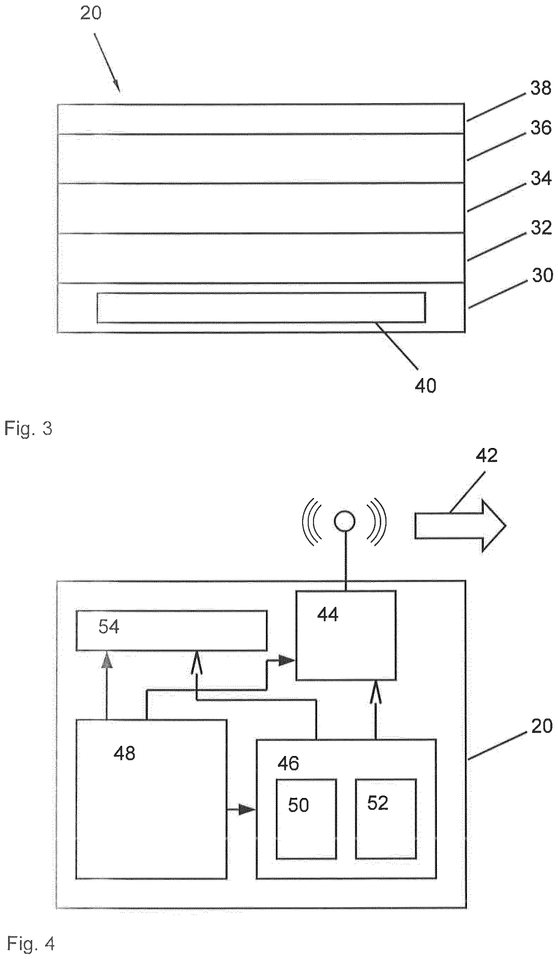

Die Darstellung in Figur 3 zeigt eine Ausführungsform eines energieautarken Aufzugsanlagenbedienelements 20 in einer geschnittenen und schematisch vereinfachten Seitenansicht. Dabei ist der schichtartige Aufbau des Bedienelements 20 erkennbar. Die dargestellte Ausführungsform umfasst auch optionale Schichten. Die Darstellung in Figur 4 zeigt demgegenüber das Bedienelement 20 in Form eines schematisch vereinfachten Blockdiagramms.

Gemäß der Darstellung in Figur 3 umfasst das Bedienelement 20 eine auch als Träger- oder Strukturelement fungierende Basisschicht 30, eine darüber liegende, grundsätzlich optionale piezoelektrische Schicht 32, eine nochmals darüber liegende Anzeigeschicht 34, eine oberhalb der Anzeigeschicht 34 liegende, grundsätzlich optionale transparente photosensitive Schicht 36 sowie eine oberhalb der photosensitiven Schicht 36 liegende, transparente Schutzschicht 38. Auch die Schutzschicht 38 ist grundsätzlich optional. Die Schutzschicht 38 ist dann sinnvoll, wenn das Bedienelement 20 zum Beispiel gegen Feuchtigkeit und sonstige Umwelteinflüsse, aber auch gegen Beschädigungen wie Kratzer und dergleichen zu schützen ist. Ohne eine solche Schutzschicht 38 übernimmt eine Oberfläche der dann außen liegenden Schicht zumindest zum Teil die Funktion der Schutzschicht 38.

Bei der gezeigten Ausführungsform fungiert die Basisschicht 30 auch als Ort zur Aufnahme eines Energiespeichers 40, zum Beispiel in Form einer oder mehrerer Batterien, Akkus, Kondensatoren, SuperCaps oder dergleichen.

Die piezoelektrische Schicht 32 fungiert als Mittel zur Erfassung einer Eingabe oder einer sonstigen Bedienhandlung - im Folgenden zusammenfassend als Bedienhandlung bezeichnet - eines Benutzers der Aufzugsanlage 10. Als Bedienhandlung drückt der Benutzer zum Beispiel auf einen Flächenabschnitt im zweiten Bereich 26 (Fig. 2) der Frontseite des Bedienelements 20, um auf diese Weise ein gewünschtes Zielstockwerk auszuwählen. Die mit dem Drücken auf die Frontseite des Bedienelements 20 ausgeübte Kraft führt zu einer elektrischen Spannung über einem oder mehreren von der piezoelektrischen Schicht 32 umfassten Piezoelementen (nicht separat dargestellt). Entsprechend kann aufgrund der resultierenden Spannung automatisch der Ort der Berührung ermittelt und entsprechend - ebenfalls automatisch - anhand der Bedienhandlung ein Signal 42 (siehe Fig. 4) generiert werden, das für den Kabinenruf mittels des Bedienelements 20 leitungslos an die Aufzugsanlagensteuerung 16 übermittelt und dort in an sich bekannter Art und Weise verarbeitet wird.

Zum leitungslosen Versenden eines solchen Signals 42 umfasst das Bedienelement 20 eine Sendeeinheit 44, insbesondere eine kombinierte Sende-/Empfangseinheit 44. Diese wird mittels einer vom Bedienelement 20 umfassten Verarbeitungseinheit 46 angesteuert. Die Verarbeitungseinheit 46 einerseits und die Sendeeinheit 44 oder die Sende-/Empfangseinheit 44 andererseits - die nachfolgende Beschreibung wird im Interesse einer besseren Lesbarkeit, aber ohne Verzicht auf eine weitergehende Allgemeingültigkeit am Beispiel eines Bedienelements 20 mit einer Sende-/Empfangseinheit 44 fortgesetzt - werden mittels einer vom Bedienelement 20 ebenfalls umfassten Energiegewinnungseinheit 48 sowie ggf. aus dem Energiespeicher 40 mit elektrischer Energie versorgt.

Die Verarbeitungseinheit 46 umfasst in an sich bekannter Art und Weise einen ASIC, einen Mikroprozessor 50 oder dergleichen und einen Speicher 52, in den ein Steuerprogramm ladbar ist, das beim Betrieb des Bedienelements 20 mittels des Mikroprozessors 50 ausgeführt wird. Unter Kontrolle des Steuerprogramms erfolgen die Auswertung einer jeweiligen Bedienhandlung, die Generierung eines entsprechenden Signals 42 sowie die Ansteuerung der Sende-/Empfangseinheit 44 zum leitungslosen Aussenden des Signals 42.

Die erwähnte piezoelektrische Schicht 32 kann alleine oder ergänzend als Energiegewinnungseinheit 48 fungieren, denn die aufgrund einer Bedienhandlung resultierende elektrische Spannung ist auch zur elektrischen Energieversorgung der Verarbeitungseinheit 46 und der Sende-/Empfangseinheit 44 verwendbar. Bei der in Figur 3 gezeigten Ausführungsform des Bedienelements 20 mit einer photosensitiven Schicht 36 fungiert dieses als Photovoltaikmodul und damit ebenfalls als Energiegewinnungseinheit 48. Eine aufgrund von einfallendem Umgebungslicht resultierende Spannung ist zur elektrischen Energieversorgung der Verarbeitungseinheit 46 und der Sende-/Empfangseinheit 44 verwendbar. Alternativ oder zusätzlich kann das Bedienelement 20, zum Beispiel in der Basisschicht 30, als Empfänger elektromagnetisch übertragener Energie auch eine oder mehrere Induktionsspulen (nicht gezeigt) aufweisen, wobei in einem solchen Fall die Induktionsspulen oder die Gesamtheit der Induktionsspulen ebenfalls als Energiegewinnungseinheit 48 fungieren, denn mittels eines zum Beispiel vom Benutzer mitgeführten Senders lässt sich in an sich bekannter Art und Weise auf leitungslosem Wege Energie in das Bedienelement 20 einspeisen, die als elektrische Spannung über der oder jeder Induktionsspule abgreifbar und zur elektrischen Energieversorgung der Verarbeitungseinheit 46 und der Sende-/Empfangseinheit 44 verwendbar ist.

Die Anzeigeschicht 34 fungiert als ebenfalls mittels der Energiegewinnungseinheit 48 mit elektrischer Energie versorgbare Anzeigeeinheit 54, und die Ansteuerung der Anzeigeeinheit 54 erfolgt unter Kontrolle des Steuerungsprogramms mittels der Verarbeitungseinheit 46. Mittels der Anzeigeeinheit 54 erfolgt in an sich bekannter Art und Weise eine optische Rückmeldung an den Benutzer im Anschluss an die Bedienhandlung oder im Anschluss an eine Auswertung eines aufgrund der Bedienhandlung generierten Signals 42. Eine solche Rückmeldung wird üblicherweise von der Aufzugsanlagensteuerung 16 drahtlos über die Sende-/Empfangseinheit 44 an das Bedienelement 20 übermittelt und durch dessen Anzeigeeinheit 54 angezeigt. Zusätzlich oder alternativ kann eine solche Rückmeldung an den Benutzer auch mittels der piezoelektrischen Schicht 32 als haptische Rückmeldung erfolgen. Dann wird der Benutzer zum Beispiel durch ein Vibrieren des Bedienelements 20 informiert, dass die Bedienhandlung registriert ober bereits durch die Aufzugsanlagensteuerung 16 ausgewertet wurde. Die Ansteuerung der piezoelektrischen Schicht 32 zur Erzeugung einer solchen haptischen Rückmeldung erfolgt bevorzugt mittels der von der Energiegewinnungseinheit 48 bereitgestellten elektrischen Energie. In Abhängigkeit von der insoweit zur Verfügung stehenden elektrischen Energie können eine Dauer und/oder eine Intensität der haptischen Rückmeldung automatisch durch das Bedienelement 20, nämlich dessen Verarbeitungseinheit, angepasst werden. Sofern die zur Verfügung stehende elektrische Energie für eine minimale haptische Rückmeldung nicht ausreicht, wird zur Erzeugung der haptischen Rückmeldung auf die in dem Energiespeicher 40 gespeicherte Energie zurückgegriffen.

Die elektrische Energieversorgung der Verarbeitungseinheit 46, der Sende-/Empfangseinheit 44 und der Anzeigeeinheit 54 mittels der Energiegewinnungseinheit 48 ist in der Darstellung in Figur 4 in Form von jeweils von der Energiegewinnungseinheit 48 ausgehenden Pfeilen veranschaulicht. Die Ansteuerung der Sende-/Empfangseinheit 44 und der Anzeigeeinheit 54 mittels der Verarbeitungseinheit 46 ist in der Darstellung in Figur 4 ebenfalls in Form Pfeilen, nämlich jeweils von der Verarbeitungseinheit 46 ausgehenden Pfeilen, veranschaulicht.

Im Sinne eines möglichst geringen Verbrauchs elektrischer Energie durch das energieautarke Bedienelement 20 basiert die Anzeigeeinheit 54 auf einer Anzeigetechnik ohne erforderliche Erhaltungsenergie. Dazu wird zur Vermeidung von Wiederholungen auf die eingangs vorangestellten Erläuterungen verwiesen. Indem eine mittels der Anzeigeeinheit 54 unter Abruf elektrischer Energie aus der Energiegewinnungseinheit 48 und/oder dem Energiespeicher 40 dargestellte jeweilige Benutzerinformation auch nach Wegnahme der Erhaltungsenergie stabil bleibt (Stichwort: E-Paper), ist der Energieverbrauch des Bedienfelds 20 im laufenden Betrieb minimal.

Wenn die Energiegewinnungseinheit 48 keine elektrische Energie liefert, ist dies demnach zunächst unproblematisch. Wenn aufgrund fehlender elektrischer Energie eine Abarbeitung des Steuerprogramms der Verarbeitungseinheit 46 nicht erfolgt, bleiben bestehende Anzeigen der Anzeigeeinheit 54 erhalten. Zudem beginnen die Abarbeitung des Steuerprogramms und der Betrieb der Verarbeitungseinheit 46 insgesamt automatisch unmittelbar dann wieder, sobald die Energiegewinnungseinheil 48 elektrische Energie liefert.

Dies kann zum Beispiel der Fall sein, indem der Benutzer der Aufzugsanlage 10 aufgrund eines Bewegungsmelders oder dergleichen eine Beleuchtung aktiviert, die ausreichend Umgebungslicht liefert, damit ein als Energiegewinnungseinheit 48 oder als Teil einer solchen Energiegewinnungseinheit 48 fungierendes Photovoltaikmodul elektrische Energie liefert. Sofern im Bereich des energieautarken Bedienelements 20 von einer dauerhaft ausreichenden Beleuchtung ausgegangen werden kann, ist die Energieversorgung des Bedienelements 20 mittels eines als Energiegewinnungseinheit 48 oder als Teil einer Energiegewinnungseinheit 48 fungierenden Photovoltaikmoduls ohnehin kein Problem. Wenn das Bedienelement 20 kein Photovoltaikmodul aufweist oder eine dauerhaft ausreichende Beleuchtung nicht gewährleistet ist, kann der Benutzer der Aufzugsanlage 10 quasi mittelbar oder unmittelbar als Energiequelle fungieren. Wenn das Bedienelement 20 als druckempfindliches Bedienelement 20 mit einer piezoelektrischen Schicht 32 ausgeführt ist und davon umfasste Piezoelemente als Energiegewinnungseinheit 48 oder Teil einer Energiegewinnungseinheit 48 fungieren, "weckt" der Benutzer durch seine Bedienhandlung ein aufgrund fehlender elektrischer Energie inaktiv gewordenes Bedienelement 20 gleichsam wieder auf. Sobald die Energiegewinnungseinheit 48 die für einen Betrieb der sonstigen Funktionseinheiten 46, 44, 54 des Bedienelements 20 ausreichende elektrische Energie liefert, ist das Bedienelement 20 wieder in Funktion und kann auf Bedienhandlungen des Benutzers reagieren. Wenn das Bedienelement 20 eine oder mehrere Induktionsspulen als Empfänger für eine elektromagnetische Energieübertragung aufweist, kann das Aktivieren ("Aufwecken") des Bedienelements 20 unbemerkt durch den Benutzer aufgrund eines vom Benutzer mitgeführten Senders erfolgen. Der Sender, zum Beispiel ein Mobiltelefon des Benutzers oder dergleichen, strahlt dabei in an sich bekannter Art und Weise elektromagnetische Wellen ab, die von der oder jeder Induktionsspule des Bedienelements 20 empfangen werden und zu einer für den Betrieb der oben genannten Funktionseinheiten 46, 44, 54 verwendbaren elektrischen Spannung führen.

Im Falle eines Bedienelements 20 mit einer Sende-/Empfangseinheit 44 kann die Bedienhandlung in Bezug auf die Aufzugsanlage 10 auch mittels eines vom Benutzer mitgeführten Senders, beispielsweise mittels eines Mobiltelefons oder dergleichen, erfolgen. Eine piezoelektrische Schicht 32 oder dergleichen auf Seiten des Bedienelements 20 ist dann entbehrlich. Daten zu der zum Beispiel am Mobiltelefon vorgenommenen Bedienhandlung werden dann auf leitungslosem Weg, zum Beispiel nach dem sogenannten NFC-Standard, vom jeweiligen Sender an das Bedienelement 20 übermittelt und dort mittels der Sende-/Empfangseinheit 44 empfangen. Die dabei abgestrahlten elektromagnetischen Wellen können ebenfalls mittels einer oder mehrerer von dem Bedienelement 20 umfasster Induktionsspule bzw. -spulen zur Energieversorgung der Funktionseinheiten 46, 44, 54 des Bedienelements 20 verwendet werden. Des Weiteren kann die leitungslose Übertragung elektrischer Energie auch im Zuge einer grundsätzlich an sich bekannten Authentifizierung eines Benutzers anhand eines von dem Benutzer mitgeführten Senders erfolgen. Ein solcher Sender sendet einen zur Authentifizierung bestimmten Code aus. Sobald sich der Sender im Erfassungsbereich des Bedienelements 20 befindet, werden die dabei abgestrahlten elektromagnetischen Wellen mittels einer oder mehrerer von dem Bedienelement 20 umfasster Induktionsspulen zur Energieversorgung der Funktionseinheiten 46, 44, 54 des Bedienelements 20 verwendet. Sobald diese ausreichend mit elektrischer Energie versorgt werden, kann der zur Authentifizierung übermittelte Code geprüft und die Verwendung des Bedienelements 20 im jeweils vorgesehenen Umfang freigegeben werden. Genauso wie drahtlos Informationen an das Bedienelement 20 übermittelbar sind, sind auch und in grundsätzlich an sich bekannter Art und Weise Informationen vom Bedienelement 20 auf drahtlosem Wege an einen entsprechenden Empfänger, also zum Beispiel ein Mobiltelefon des Benutzers, übermittelbar. In einer solchen Kommunikationsbeziehung fungiert das Bedienelement 20 als Sender und übermittelt zum Beispiel eigene Daten oder Daten der Aufzugsanlagensteuerung 16.

Im Betrieb mittels der Energiegewinnungseinheit 48 erzeugte überschüssige elektrische Energie kann in den Energiespeicher 40 eingespeist und dort bei Bedarf wieder abgerufen werden.

Im Falle eines Bedienelements 20 mit einer Sende-/Empfangseinheit 44 kann die Sende-/Empfangseinhcit 44 auch zur Konfiguration des Bedienelements 20 verwendet werden. Mittels eines mit der Sende-/Empfangseinheit 44 kommunizierenden Senders können ein Steuerprogramm und/oder Daten für die Anzeigeeinheit 54 in den Speicher 52 der Verarbeitungseinheit 46 geladen werden. Bei den Daten für die Anzeigeeinheit 54 kann es sich um Daten handeln, welche die mittels der Anzeigeeinheit 54 bewirkbare Darstellung - also zum Beispiel das Layout einer solchen Darstellung - bestimmen, zum Beispiel die Anzahl auswählbarer Stockwerke und deren Darstellung.

Im Interesse einer Reduzierung des Energieverbrauchs eines energieautarken Aufzugsanlagenbedienelements 20, 22 im laufenden Betrieb ist bei einer besonderen Ausführungsform des Bedienelements 20, 22 vorgesehen, dass die Anzeigeeinheit 54 so wenig wie nötig angesteuert wird. Während bisher oftmals die von einem Bedienfeld 20, 22 erzeugte Darstellung im Weitesten Sinne als eine Animation der Bewegung der Aufzugskabine 14 aufgefasst werden kann, derart, dass zum Beispiel je nach aktueller Position der Aufzugskabine 14 die jeweilige Stockwerksnummer angezeigt wird, soll hier die Anzahl wechselnder Darstellungen reduziert werden. So ist es zum Beispiel ausreichend, eine sich bewegende Aufzugskabine 14 nur durch einen Richtungspfeil darzustellen. Eine solche Darstellung erfordert keine Änderung, während die Aufzugskabine 14 unterschiedliche Stockwerke 18 passiert. Weil bei einer auf einer Anzeigetechnik ohne erforderliche Erhaltungsenergie basierenden Anzeigeeinheit 54 elektrische Energie nur dann benötigt wird, wenn die jeweils erzeugte Darstellung wechselt, lässt sich durch eine Reduzierung der Anzahl wechselnder Darstellungen der Energiebedarf zusätzlich reduzieren, so dass die von der jeweiligen Energiegewinnungseinheit 48 erhältliche elektrische Energie länger für die Versorgung der Verarbeitungseinheit 46 und der Sende-/Empfangseinheit 44 des Bedienelements 20, 22 ausreicht.

Das als energieautarkes Aufzugsanlagenbedienelement 20, 22 fungierende Bedienelement 20, 22 ist leicht installierbar, denn weder zur Energieversorgung des Bedienelements 20 noch zur Weiterleitung von Daten vom oder zum Bedienelement 20 ist eine Verkabelung erforderlich. Ein energieautarkes Aufzugsanlagenbedienelement 20, 22 verbraucht keine extern aus der Aufzugsanlage 10 zuzuführende elektrische Energie und reduziert damit den Energiebedarf der Aufzugsanlage 10. Das ohne die Notwendigkeit externer Verkabelung zur leitungslosen Datenübertragung eingerichtete energieautarke Aufzugsanlagenbedienelement 20, 22 kann auf leitungslosem Wege leicht konfiguriert und an geänderte Bedürfnisse angepasst werden. Dies kann vor Ort geschehen und auch durch wenig geübte Bediener erfolgen, denn eine solche Konfiguration reduziert sich im Grunde auf die Initiierung eines leitungslosen Datenaustausches zwischen einem jeweiligen Sender, zum Beispiel einem mobilen Computer oder dergleichen, und dem jeweiligen Bedienelement 20, 22.

Ohne die Notwendigkeit externer Verkabelung kommt die Verwendung eines oder mehrerer energieautarker Aufzugsanlagenbedienelemente 20, 22 speziell auch zur Nachrüstung/Modernisierung einer Aufzugsanlage 10 in Betracht. Zum Anbringen eines solchen Bedienelements 20, 22 müssen nämlich keine Löcher oder dergleichen gebohrt werden. Wenn die Aufzugsanlage 10 zum Beispiel keine für die Aufnahme eines Bedienelements 20, 22 ausreichend breiten Türpfosten aufweist, kann das Bedienelement 20, 22 ohne weiteres auch neben solchen Türpfosten angebracht werden. Zudem erfordert das Bedienelement 20, 22 zur Anbringung nicht notwendigerweise einen ebenen Untergrund, so dass sich die Anbringungsmöglichkeiten erhöhen und das Bedienclement 20, 22 aufgrund biegeelastischer Schichten 30-38 auch an runden Wänden oder dergleichen angebracht werden kann. Alle diese Vorteile und der damit beim Anbringen von Bedienelementen 20, 22 einhergehende Zeitgewinn sowie die sich zum Beispiel hinsichtlich des Anbringungsorts ergebenden zusätzlichen Freiheiten gelten selbstverständlich auch im Falle einer Neuinstallation einer Aufzugsanlage 10.

Einzelne im Vordergrund stehende Aspekte der hier eingereichten Beschreibung lassen sich damit kurz wie folgt zusammenfassen: Angegeben werden ein energieautarkes Aufzugsanlagenbedienelement 20, 22 mit Mitteln 32, 46 zur Erfassung einer Bedienhandlung und Mitteln 44 zur leitungslosen Weiterleitung zumindest eines automatisch anhand der Bedienhandlung durch das Aufzugsanlagenbedienelement 20, 22 generierbaren Signals 42 an eine entfernte Aufzugsanlagensteuerung 16 sowie mit einer von dem Aufzugsanlagenbedienelement 20, 22 umfassten Energiegewinnungseinheit 48 und eine Aufzugsanlage mit einem solchen energieautarken Aufzugsanlagenbedienelement 20, 22. Weiter werden unterschiedliche Verfahren zum Betrieb eines solchen Aufzugsanlagenbedienelements 20, 22 angegeben, zum Beispiel ein Betriebsverfahren zur Energiegewinnung mittels eines Piezoelements oder einer piezoelektrischen Schicht 32, ein Betriebsverfahren zur Energiegewinnung mittels eines Photovoltaikmoduls oder einer photosensitiven Schicht 36 und/oder ein Betriebsverfahren zur Energiegewinnung mittels zumindest einer als Empfänger für elektromagnetisch übertragene Energie fungierenden Induktionsspule, wobei die elektromagnetische Energieübertragung zum Beispiel im Zusammenhang mit einer ohnehin beabsichtigten Datenübertragung erfolgt, zum Beispiel im Zusammenhang mit einer Authentifizierung eines Benutzers oder dergleichen.

## Patentansprüche

1. Energieautarkes Aufzugsanlagenbedienelement (20, 22) mit
Mitteln (32, 46) zur Erfassung einer Bedienhandlung und
Mitteln (44) zur leitungslosen Weiterleitung zumindest eines automatisch anhand der Bedienhandlung durch das Aufzugsanlagenbedienelement (20, 22) generierbaren Signals (42) an eine entfernte Aufzugsanlagensteuerung (16) sowie
einer von dem Aufzugsanlagenbedienelement (20, 22) umfassten Energiegewinnungseinheit (48), und mit einem schichtartigen Aufbau und einer konfigurierbaren Anzeigeeinheit (54) in einer Schicht (34) sowie der Energiegewinnungseinheit (48) in zumindest einer weiteren Schicht (32, 36).

2. Energieautarkes Aufzugsanlagenbedienelement (20, 22) nach Anspruch 1, mit zumindest einem Photovoltaikmodul als Energiegewinnungseinheit (48).

3. Energieautarkes Aufzugsanlagenbedienelement (20, 22) nach Anspruch 1 oder 2, mit zumindest einem Piezoelement als Energiegewinnungseinheit (48).

4. Energieautarkes Aufzugsanlagenbedienelement (20, 22) nach Anspruch 1, 2 oder 3, mit zumindest einer Induktionsspule als Energiegewinnungseinheit (48).

5. Energieautarkes Aufzugsanlagenbedienelement (20, 22) nach einem der vorangehenden Ansprüche, mit einem aus der Energiegewinnungseinheit (48) speisbaren Energiespeicher (40).

6. Energieautarkes Aufzugsanlagenbedienelement (20, 22) nach Anspruch 1, mit einer auf einer Anzeigetechnik ohne erforderliche Erhaltungsenergie basierenden Anzeigeeinheit (54).

7. Energieautarkes Aufzugsanlagenbedienelement (20, 22) nach Anspruch 1 oder 6, mit einer piezoelektrischen Schicht (32) als Mittel zur Erfassung einer Bedienhandlung, wobei die piezoelektrische Schicht (32) ebenfalls als Energiegewinnungseinheit (48) fungiert.

8. Aufzugsanlage (10) mit zumindest einem energieautarken Aufzugsanlagenbedienelement (20, 22) nach einem der vorangehenden Ansprüche.

## Claims

1. An energy-autonomous elevator system control element (20, 22) comprising
means (32, 46) for detecting a control operation and
means (44) for wireless transmission of at least one signal (42), which can be generated automatically with the aid of the control operation by the elevator system control element (20, 22), to a remote elevator system controller (16) and
an energy recovery unit (48) constituted by the elevator system control element (20, 22), and having a layer-like structure and a configurable display unit (54) in one layer (34) and the energy recovery unit (48) in at least one further layer (32, 36).

2. The energy-autonomous elevator system control element (20, 22) according to claim 1, comprising at least one photovoltaic module as an energy recovery unit (48).

3. The energy-autonomous elevator system control element (20, 22) according to claim 1 or 2, comprising at least one piezoelement as an energy recovery unit (48).

4. The energy-autonomous elevator system control element (20, 22) according to claim 1, 2 or 3, comprising at least one induction coil as an energy recovery unit (48).

5. The energy-autonomous elevator system control element (20, 22) according to any one of the preceding claims, comprising an energy storage system (40) which can be supplied from the energy recovery unit (48).

6. The energy-autonomous elevator system control element (20, 22) according to claim 1, comprising a display unit (54) based on a display technology without required maintenance energy.

7. The energy-autonomous elevator system control element (20, 22) according to claim 1 or 6, comprising a piezoelectric layer (32) as the means for detecting a control operation, wherein the piezoelectric layer (32) also functions as an energy recovery unit (48).

8. An elevator system (10) comprising at least one energy-autonomous elevator system control element (20, 22) according to any one of the preceding claims.

## Revendications

1. Élément de commande de système d'ascenseur autonome en énergie (20, 22) comprenant :
des moyens (32, 46) pour la détection d'une action de commande, et
des moyens (44) pour la transmission sans fil d'au moins un signal (42) susceptible d'être généré automatiquement à l'aide d'une action de commande par l'élément de commande de système d'ascenseur (20, 22) à une commande de système d'ascenseur à distance (16), et
une unité de gain d'énergie (48) associée à l'élément de commande de système d'ascenseur (20, 22), et avec une structure similaire à une couche et une unité d'affichage configurable (54) dans une couche (34) et l'unité de gain d'énergie (48) dans au moins une autre couche (32, 36).

2. Élément de commande de système d'ascenseur autonome en énergie (20, 22) selon la revendication 1, comprenant au moins un module photovoltaïque en tant qu'unité de gain d'énergie (48).

3. Élément de commande de système d'ascenseur autonome en énergie (20, 22) selon la revendication 1 ou 2, comprenant au moins un élément piézoélectrique en tant qu'unité de gain d'énergie (48).

4. Élément de commande de système d'ascenseur autonome en énergie (20, 22) selon la revendication 1, 2 ou 3, comprenant au moins une bobine d'induction en tant qu'unité de gain d'énergie (48).

5. Élément de commande de système d'ascenseur autonome en énergie (20, 22) selon l'une des revendications précédentes, comprenant un réservoir d'énergie (40) susceptible d'être alimenté à partir de l'unité de gain d'énergie (48).

6. Élément de commande de système d'ascenseur autonome en énergie (20, 22) selon la revendication 1, comprenant une unité d'affichage (54) basée sur une technique d'affichage sans obtention d'énergie nécessaire.

7. Élément de commande de système d'ascenseur autonome en énergie (20, 22) selon la revendication 1 ou 6, comprenant une couche piézoélectrique (32) en tant que moyen de détection d'une action de commande, dans lequel la couche piézoélectrique (32) sert également d'unité de gain d'énergie (48).

8. Système d'ascenseur (10) comprenant au moins un élément de commande de système d'ascenseur (20, 22) selon l'une des revendications précédentes.
